# EUROPEAN PATENT APPLICATION

(11) **EP 2 263 471 A1**
(43) Date of publication of application: **22.12.2010**
(21) Application number: 09162069.0
(22) Date of filing: 05.06.2009
(51) Int. Cl.: A23C 9/142, A23C 11/00, A23L 1/19, A23L 2/58, A23L 2/62, A23L 2/66

(54) **Liquid beverage whitener and method of preparing same**

(71) Applicant: Nestec S.A., 1800 Vevey (CH)
(72) Inventor: KUROKAWA, Masayuki, Kanagawa JP - 247-0006 (JP)
(74) Representative: Cogniat, Eric Jean Marie

(57) **Abstract**

There is provided a liquid beverage whitener containing water, an emulsifier and ultrafiltrated, concentrated milk proteins dispersed in the water with the emulsifier, wherein the fat content is less than 0.5% by mass, as well as a method of preparing a liquid beverage whitener, the method including the steps of adding ultrafiltratcd, concentrated milk proteins and an emulsifier to water; and then homogenizing it to obtain a white suspension.

## Description

### Technical Field

The invention relates to a liquid beverage whitener and to a method of preparing the whitener.

### Background Art

Beverage whiteners are foods that are added to beverages such as coffee and tea and that impart white turbidity, creaminess and cream-like taste to the beverages. Beverage whiteners are sometimes referred to as "creams" or "creamers." The beverage whiteners are available in the liquid form or powdered form.

Conventional liquid beverage whiteners are oil-in-water emulsions and normally contain from 10 to 40% by mass of milk fat or vegetable fat. JP-A-2000060425 discloses a beverage whitening agent with reduced fat content, which comprises fats in an amount that is smaller than the minimum quantity of the fats alone capable of imparting white turbidity to the beverage, and a dispersing substance other than fats in an amount sufficient to cause the beverage to turn turbid in white when added to it.

As the above-identified patent publication discloses, the whiteners whose oil and fat contents are lowered require inorganic substances, such as calcium carbonate or titanium dioxide, or organic substances that are water-insoluble or water-dispersible to be added for the purposes of obtaining sufficient white color (white turbidity) as whiteners. However, the addition of these substances causes problems linked to their precipitation or insufficient solubility in beverages. Such substances also cause storing difficulties.

### Summary of the invention

An object of the invention is, therefore, to provide a whitener capable of exhibiting sufficient whiteness (or white turbidity) as a whitener without requiring addition of the above-mentioned inorganic or organic substances.

Thus, an embodiment of the invention provides a liquid beverage whitener comprising water, an emulsifier and ultrafiltrated, concentrated proteins, such as milk proteins, dispersed in water with an emulsifier, wherein the fat content is less than 0.5% by mass.

It is technical common knowledge that conventional liquid beverage whiteners are emulsions of the oil-in-water type comprising fats as raw materials. In contrast, the liquid beverage whitener of this invention comprises water, an emulsifier and ultrafiltrated, concentrated milk proteins dispersed in water with the emulsifier. The whitener, therefore, allows a white turbidity to be imparted to a beverage such as coffee or tea when mixed together. The whitener also allows rich body and mildness to the beverage although the whitener does not contain any inorganic substance such as titanium dioxide or calcium carbonate. Products such as titanium dioxide were often added to increase the white turbidity of beverage whiteners. However, titanium dioxide often separates and precipitates during storage of the whiteners. There were also cases where powdered whiteners were insufficiently soluble in beverages, frequently leading to precipitations when they were added to the beverages. By contrast, because the liquid beverage whitener of this invention is a liquid and does not contain products such as titanium dioxide, it has a high solubility in a beverage. Furthermore, the whitener can appeal to consumers who are sensitive to fat intake, since its fat content is as little as less than 0.5% by mass. For this reason, the whitener may be considered as a non-fat whitener.

It is further preferred that the content of the ultrafiltrated, concentrated milk proteins described above is between 1% by mass and 20% by mass when it is based on the liquid beverage whitener. It is also further preferred that the ultrafiltrated, concentrated milk proteins are prepared by ultrafiltering nonfat milk until its volume reaches 1/3 to 1/10. The liquid beverage whitener comprises the thus-prepared ultrafiltrated, concentrated milk proteins in the above ratio; it can impart higher white turbidity and mildness or tastes of higher quality to the beverage.

The above-indicated emulsifier is a food-grade surfactant, meaning that it that is suitable for human consumption. For instance, it may be a surfactant that has been approved as a food additive. The content of the emulsifier is preferably from 0.05 to 0.3% by mass when it is based on the liquid beverage whitener. The liquid beverage whitener comprising the emulsifier in this ratio can impart higher white turbidity to the beverage.

In an embodiment, the liquid beverage whitener is lactose-free.

In another embodiment, the invention provides a beverage comprising the liquid beverage whitener described above. Further, the beverage is preferably coffee or tea. Such beverages are sometimes referred to as ready-to-drink beverages. The beverage is provided with sufficient white turbidity as well as rich body and mildness; in addition, being nonfat, it can decrease fat intake by consumers. As used herein, "nonfat" means that the fat content is less than 0.5% by mass.

In another embodiment, the invention provides a method of preparing a liquid beverage whitener comprising the steps of adding ultrafiltrated, concentrated milk proteins and an emulsifier to water; and then homogenizing it to obtain a white suspension. This preparation method can produce the liquid beverage whitener described above.

In a further embodiment, the invention provides a method of lowering the fat content of a liquid beverage whitener comprising the steps of adding ultrafiltrated, concentrated milk proteins and an emulsifier to water; and then homogenizing it to obtain a white suspension. This method can impart sufficient white turbidity to a beverage such as coffee or tea when it is applied to the beverage; it can lower the fat content of the liquid beverage whitener capable of furnishing the beverage with rich body and mildness. Furthermore, there can be provided a method of preparing a nonfat liquid beverage whitener.

According to the invention, there can be provided a nonfat liquid beverage whitener capable of imparting sufficient white turbidity to a beverage such as coffee or tea as well as of furnishing the beverage with rich body and mildness when added to it despite that no fat is used as the raw material and no pigment such as titanium oxide is included.

### Detailed description of the invention

In the present specification, "nonfat milk" refers to adjusted milk of which almost all milk fat components have been removed. More specifically, it refers to milk having a milk fat content of less than 0.5% by mass and a nonfat milk solid content of not less than 8.0% by mass.

As the concentrated milk proteins, there are casein having a protein content of 95% by mass or more, whey protein concentrate (WPC) having a protein content of 80% by mass or more, whey protein isolate (WPI) having a protein content of 90% by mass or more, whole milk protein concentrate (MPC) having a protein content of 80% by mass or more of which about 80% by mass is casein and of which about 20% by mass is whey protein, total milk proteins (TMP) that is purified from the whole milk protein concentrate through pH adjustment and heat treatment, and others. Moreover, as the whole milk protein concentrates, there are a product obtained by ultrafiltration and a product such as the one obtained by a method of precipitating nonfat milk through heating and acidification and recovering proteins, among others.

As a result of experiments conducted by the present inventor, it seemed that white turbidity was insufficient for the liquid beverage whiteners comprising as a raw material, concentrated milk proteins which are prepared by methods other than ultrafiltration among those concentrated milk proteins. Therefore, it will be necessary that the concentrated milk proteins as the raw material of the liquid beverage whitener according to this invention are ultrafiltrated, concentrated milk proteins.

During the ultrafiltration of the nonfat milk, water is removed, as well as lactose and mineral components. Ultrafiltration should be carried out until the volume of the concentrated milk reaches preferably from 1/3 to 1/10 of the original nonfat milk, more preferably from 1/4 to 1/10, and most preferably from 1/5 to 1/10. The ultrafiltration is carried out usually at a pressure of from 1 to 10MPa using a membrane with a pore size of from 10⁻² to 10⁻¹ µm. The ultrafiltrated, concentrated milk proteins which can be used as the raw material of the liquid beverage whitener according to this invention contains proteins preferably at 70% by mass or greater, more preferably at 75% by mass or greater. Also, their fat content is less than 5% by mass, more preferably 3% by mass or smaller, and most preferably 2.5% by mass or smaller. In addition, the proteins contain about 80% by mass of casein and about 20% by mass of whey proteins, which composition is substantially the same as the protein composition of milk. If such ultrafiltrated, concentrated milk proteins are used as the raw material, there can be provided a nonfat liquid beverage whitener capable of imparting sufficient white turbidity to a beverage such as coffee or tea as well as of furnishing the beverage with rich body and mildness when added to it despite that no pigment such as titanium dioxide is included. As used herein, "nonfat" means that the fat content of the liquid beverage whitener is less than 0.5% by mass.

The ultrafiltrated, concentrated milk proteins that can be used as the raw material of the liquid beverage whitener according to this invention include, for example, MPC-UF80 from Meggle Japan Co. Ltd. and milk protein concentrate 480 (MPC480) from Fonterra Japan Co. Ltd., both of which are available for use. MPC-UF80 is produced by sterilizing milk, defatting, again sterilizing, and concentrating it through ultrafiltration, followed by spray-drying it into powders. MPC480 is produced by defatting milk, sterilizing, and concentrating it through ultrafiltration, followed by spray-drying it into powders. Pulverization of the ultrafiltrated, concentrated milk proteins by spray-drying is not essential to the liquid beverage whitener of this invention, but it is conveniently conducted for storage and transportation of the ultrafiltrated, concentrated milk proteins as the raw material. Spray-drying may be carried out by heating the ultrafiltrated, concentrated milk at 50-70 °C and spraying and drying it in a drying chamber wherein hot air at 150-250 °C has been fed.

The liquid beverage whitener of this invention comprises the ultrafiltrated, concentrated milk proteins preferably at between 1% by mass and 20% by mass based on the liquid beverage whitener, more preferably at between 3% by mass and 18% by mass, and most preferably at from 5 to 15% by mass. If the content of the ultrafiltrated, concentrated milk proteins is 1% by mass or less, it often happens that the white turbidity is insufficient and/or poor mildness manifests when the liquid beverage whitener is added to the beverage. Also, if the content of the ultrafiltrated, concentrated milk proteins is 20% by mass or more, there will be cases where precipitation is formed and/or roughness is felt when the liquid beverage whitener is added to the beverage.

The liquid beverage whitener of this invention further comprises an emulsifier that disperses the ultrafiltrated, concentrated milk proteins in water. Inclusion of the emulsifier enables the protection of milk protein particles derived from the concentrated milk proteins. Homogenization during preparation also allows stable micelles having a mean particle diameter of 2-4 µm to be formed, whereby sufficient white turbidity can be produced. The above-indicated emulsifier is a foodgrade surfactant. Specifically, there can be illustrated fatty acid sucrose esters, fatty acid glycerin esters, fatty acid sorbitan esters, propylene glycol fatty acid esters, and lecithin: these can be used alone or in combination. The HLB value of the emulsifier is preferably from 5 to 6, or 14 to 16. It is also possible to combine the emulsifiers within this range for use. If the HLB value is 0 to 4, 7 to 13, or 17 and greater, there will be cases where the white turbidity is insufficient and/or tastes are poor. The content of the emulsifier is preferably from 0.05 to 0.3% by mass, more preferably from 0.1 to 0.3% by mass based on the liquid beverage whitener. If the content of the emulsifier is less than 0.05% by mass, the white turbidity may sometimes be insufficient. If the content of the emulsifier exceeds 0.3% by mass, there will be cases where the taste is affected by the emulsifier and off-taste and off-flavor are sensed. Furthermore, it is not preferable from the standpoint of raw material costs.

The liquid beverage whitener of this invention may comprise a thickening and stabilizing agent(s) approved as a food additive(s), alone or in combination, to be admixed therein. Specifically, as the thickening and stabilizing agents, there can be used cellulose, guar gum, xanthan gum, gellan gum, locust bean gum, gum arabic, carrageenan, tamarinus gum, agar, konnyaku gum, pectin, gelatin and others. The thickening and stabilizing agent preferably contains cellulose and it is particularly preferred that the cellulose is microcrystalline cellulose. The inventor confirmed in experiments that even when microcrystalline cellulose was added to the liquid beverage whitener of this invention, neither aggregation nor precipitation caused. As specific formulations of the thickening and stabilizing agent, there can be used, for example, CEOLUS RC-N30 from Asahi Kasei Chemicals Corporation containing 75% by mass of cellulose, 5% by mass of xanthan gum, and 20% by mass of dextrin; and SAN ARTIST PX from San-Ei Gen F.F.I., Inc. containing 20% by mass of cellulose, 10% by mass of xanthan gum, 3.3% by mass of sodium carboxymethylcellulose, and 66.7% by mass of food materials. The content of the thickening and stabilizing agent is preferably from 0.01 to 1% by mass, more preferably from 0.1 to 1% by mass, even more preferably from 0.1 to 0.75% by mass, and most preferably from 0.2 to 0.5% by mass, based on the liquid beverage whitener. Addition of the thickening and stabilizing agent can suppress phase separation of the liquid beverage whitener.

The liquid beverage whitener of this invention may further comprise sugar or a sweetener or a flavoring agent. It can impart sufficient white turbidity to a beverage despite that it does not contain any coloring agent such as titanium oxide.

According to one embodiment, this invention provides a beverage comprising the above-identified liquid beverage whitener. As used herein, the beverages may be coffee, tea, chocolate, cocoa, green tea, soup and fruit juice. Coffee or tea are preferred. The ratio of the liquid beverage whitener to be added is preferably from 1 to 60% by mass, more preferably from 1 to 50% by mass, even more preferably from 2 to 10% by mass, and most preferably from 3 to 5% by mass, based on the total of the beverage after addition of the liquid beverage whitener.

The liquid beverage whitener of this invention may, for example, be prepared in the following manner. First, the ultrafiltrated, concentrated milk proteins and the emulsifier are added to water in a dissolving tank and mixed. Subsequently, this mixture is homogenized to produce a white suspension. Homogenization may be carried out using a high-pressure homogenizer, for example. The water to which the emulsifier and the concentrated milk proteins are added is preferably heated at 60-70 °C. The pressure of the high-pressure homogenizer is preferably 10-30 MPa, more preferably 15-20 MPa. If necessary, the white suspension is charged into a blending tank and the thickening and stabilizing agent, sugar, flavoring agent, pH adjuster and the like may further be added and mixed together. In this case, it is preferred that heat sterilization is carried out after blending and homogenization is further carried out using the high-pressure homogenizer. Continuously, the obtained liquid beverage whitener may be filled under sterilization into a container to produce a product.

According to one embodiment, this invention provides a method of lowering the fat content of a liquid beverage whitener, the method comprising the steps of adding ultrafiltrated, concentrated milk proteins and an emulsifier in water; and then homogenizing it to obtain a white suspension. This method allows the fat contents of liquid beverage whiteners that conventionally contain from 10% to 40% by mass of fats to be significantly lowered, resulting in less than 0.5% by mass.

### EXAMPLES

This invention will be further described concretely by way of examples according this invention. Nevertheless, the invention should not be limited thereto, and various modifications may become apparent to those of ordinary skill in the art and may be acquired from practice of the invention.

### Preparation of a liquid beverage whitener

In a dissolving tank, the raw materials were added to water at 60-70 °C, respectively in the ratios shown in Table 1. As the ultrafiltrated, concentrated milk proteins (which may be referred to as "UF concentrated milk proteins"), MPC480 from Fonterra Japan Co. Ltd. was used. Subsequently, homogenization was carried out using a high-pressure homogenizer at 20 MPa. Then, sterilization was carried out at 140 °C for four seconds to prepare liquid beverage whiteners of Examples 1-9. Similarly, the raw materials shown in Table 2 were used to prepare liquid beverage whiteners of Comparative Examples 1-8. Note that the ratios of the raw materials to be blended and the fat contents in Tables 1 and 2 are shown in terms of mass percentages based on the liquid beverage whiteners.

### (Measurement of L values)

Instant coffee powders NESCAFE GOLDBLEND (registered trademark) by Nestle, 2 g, was dissolved in 140 mL of boiling water. To this coffee drink was added each 5 mL of the liquid beverage whiteners according to Examples 1-9 and Comparative Examples 1-8, and thus, coffee drinks with the added whiteners according to Examples 1-9 and Comparative Examples 1-8 were made, respectively. Using a spectrophotometer (CM-3500d by Konica Minolta Sensing, Inc.), the L values of these liquid beverage whiteners and coffee drinks with the added whiteners were measured. The L value means "lightness": it is "100" in the case of complete white color and "0" in the case of complete black color. Results are shown in Tables 1 and 2.

### (Evaluation of appearances and flavors)

Based on the presence of white turbidity or precipitates, four-scale evaluations by the naked eyes (A to D) were made on the respective appearances of the liquid beverage whiteners and the coffee drinks with the added whiteners according to Examples 1-9 and Comparative Examples 1-8. Those with excellent white turbidity and without the presence of precipitates were highly evaluated, and it is shown that A scales are the most excellent ones. Similarly, the flavor of each of the coffee drinks with the added whiteners was subjected to sensory evaluation at four scales-A to D. Those with poorer tastes or little mildness are given low evaluations.

Consequently, it was demonstrated that the liquid beverage whiteners of Examples 1-9 gave sufficient white turbidity and mild flavor, although their fat contents were less than 0.5% by mass.

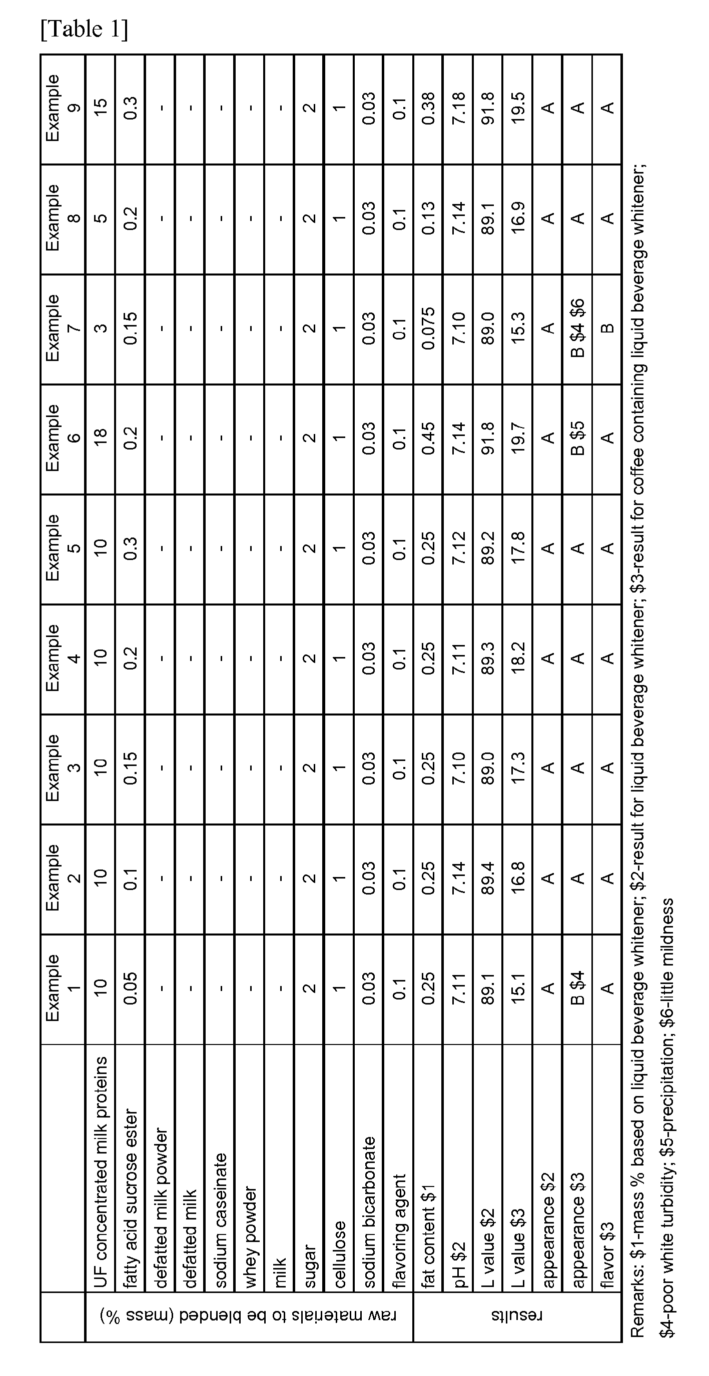

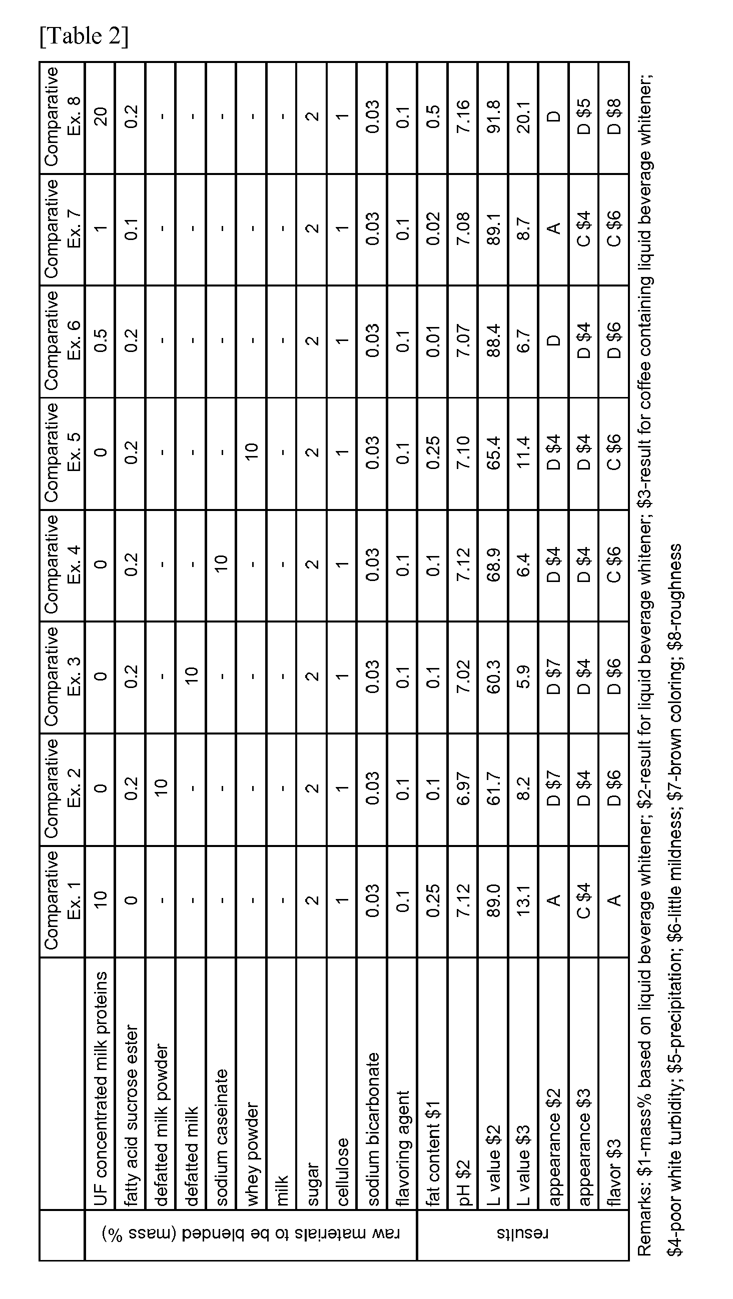

### Application of the liquid beverage whitener to canned coffee drinks

### (Preparation of the liquid beverage whitener)

In a dissolving tank, the UF concentrated milk proteins, fatty acid sucrose ester, defatted milk powders, milk, sugar and flavoring agent were added to water at 60-70 °C, respectively in the ratios shown in Table 3. Subsequently, homogenization was carried out using the high-pressure homogenizer at 20-50 MPa to prepare liquid beverage whiteners according to Example 10 and Comparative Examples 9-13. Note that the ratios of the raw materials to be blended and the fat contents in Table 3 are shown in terms of mass percentages based on the liquid beverage whiteners.

### (Preparation of coffee extract)

After roasted coffee beans were pulverized, extraction was carried out with hot water at 95 °C in the mass of about ten times that of the coffee beans. When the extraction was completed, the extract was quickly cooled to below about 25 °C. Solid-liquid separation of the coffee beans after extraction was carried out by centrifugation (with a clarifier) to produce a coffee extract.

### (Preparation of canned coffee drinks)

In a blending tank, a sodium bicarbonate solution, each of the liquid beverage whiteners according to Examples 10 and Comparative Examples 9-13, and the coffee extract were mixed, to which water was added until a predetermined volume was obtained. Subsequently, homogenization was carried out at 15-20 MPa, using the high-pressure homogenizer and heating at about 85 °C was conducted to effect preliminary sterilization. Continuously, the mixture was filled into a can container and was further sterilized at 124 °C for 20 minutes to produce each of the can coffee drinks according to Examples 10 and Comparative Examples 9-13. Note that the ratios of the raw materials to be blended and the fat contents in Table 3 are shown in terms of mass percentages based on the liquid beverage whiteners. Further, the concentration of the coffee extract was adjusted so that the soluble solid contents of the coffee may be 5% by mass based on the can coffee drink. Still further, the addition of sodium bicarbonate was such that the sodium bicarbonate would be 0.1 % by mass based on the can coffee drink. The final ratio is the canned coffee drink is one part of liquid beverage whitener for one part of coffee extract.

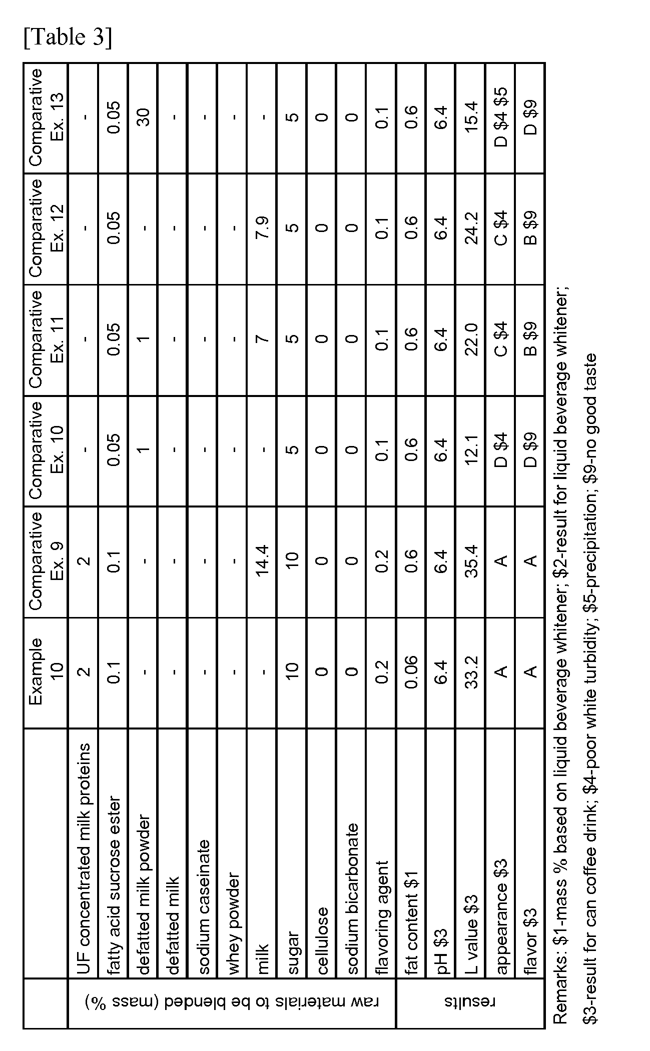

## Claims

1. A liquid beverage whitener comprising water, an emulsifier and ultrafiltrated, concentrated milk proteins dispersed in the water with the emulsifier, wherein the fat content is less than 0.5% by mass.

2. The liquid beverage whitener according to claim 1, wherein the content of the ultrafiltrated, concentrated milk proteins is between 1% by mass and 20% by mass.

3. The liquid beverage whitener according to claim 1 or 2, wherein the ultrafiltrated, concentrated milk proteins are prepared by ultrafiltering nonfat milk to a volume of 1/3 to 1/10.

4. The liquid beverage whitener according to any one of claims 1 to 3, wherein the emulsifier is a food-grade surfactant and the content of the emulsifier is from 0.05 to 0.3% by mass.

5. The liquid beverage whitener according to any one of claims 1 to 4, wherein the liquid beverage whitener is lactose-free.

6. A beverage comprising the liquid beverage whitener according to any one of claims 1 to 5.

7. The beverage according to claim 6, which is coffee or tea.

8. The beverage according to any one of claims 6 or 7, which is a ready-to-drink beverage.

9. A method of preparing a liquid beverage whitener comprising the steps of adding ultrafiltrated, concentrated milk proteins and an emulsifier to water; and then homogenizing it to obtain a white suspension.
